# EUROPEAN PATENT APPLICATION

(11) **EP 3 650 194 A1**
(43) Date of publication of application: **13.05.2020**
(21) Application number: 18759992.3
(22) Date of filing: 23.05.2018
(51) Int. Cl.: B29C 45/33, B29C 45/42, B29C 45/04, B29C 45/67

(54) **INJECTION MOULDING ASSEMBLY AND MANUFACTURING METHOD**

(30) Priority: 04.07.2017 ES 201730886
(71) Applicant: Quinorgan, S.L., 08110 Montcada I Reixac, Barcelona (ES)
(72) Inventor: JOVE MERCADER, Ramon, 08110 Montcada I Reixac, Barcelona (ES)
(74) Representative: Isern Patentes y Marcas S.L.
(86) International application number: PCT/ES2018/070371
(87) International publication number: WO 2019/008199

(57) **Abstract**

The invention relates to an injection molding assembly for manufacturing pieces that externally have at least a flat face, having injection means (3) provided for injecting a plastic material, a mold for forming a piece, which has two movable parts (1, 2) at least with respect to one another and which are able to face one another, wherein one of the parts of the mold has at least a mold cavity for forming the molded piece. The second part of the mold (2) comprises an endless belt that moves along a path by actuation means, at least one of the faces thereof being smooth which acts as a counter-mold, including pressing means (4) provided to apply pressure and maintain a region of the belt facing and in contact with the first part of the mold, such that at least one cavity is in a closed position during a molding condition.

## Description

### SPECIFICATION

### OBJECT OF THE INVENTION

The object of the present application is to register an injection molding assembly as well as a manufacturing method by means of the injection molding of a piece of plastic material with an essentially laminar form.

More specifically, the invention proposes the development of an injection molding assembly for manufacturing pieces that externally have at least a flat face, provided with injection means provided to inject a plastic material, and a mold to form a piece that has two movable parts which are able to face each other, wherein one of the two parts of the mold has an endless belt which acts as a counter-mold during the injection or molding stage and transportation means for the piece or pieces obtained inside the mold.

### BACKGROUND OF THE INVENTION

Many injection systems and machines for forming pieces of different plastic materials have been well known for a long time. Conventional plastic injection machines normally comprise injection means (nozzles, material supply means, etc.) and a molding region or area which includes a mold formed by two parts abled to be coupled together, wherein at least one of the parts includes one or more cavities which have the form of the molded piece to be obtained by the machine. These two parts are usually made up of two metal bodies which in a closed condition during the injection stage take on a "box" shape. To facilitate the ejection of the pieces from the inside of the mold, ejection machines are used, which implies an increase in the complexity in the time it takes to manufacture the molds, as well as an increase in manufacturing costs.

Furthermore, the applicant is currently unaware of the existence of an invention having all the characteristics described herein.

### DESCRIPTION OF THE INVENTION

The present invention has been developed for the purpose of providing an injection molding assembly configured as a novelty in the field of the application and resolves the aforementioned drawbacks, also providing other additional advantages that will be evident from the accompanying description below.

It is therefore an object of the present invention to provide an injection molding assembly for manufacturing pieces which externally have at least one flat face, which comprises injection means provided to inject a plastic material, a mold to form a piece that has two movable parts, at least one with respect to the other and which are able to face each other, wherein one of the two parts of the mold has a mold cavity to form the molded piece, and is characterized by the fact that the second part of the mold comprises an endless belt, made, for example, of a metal material, able to move along a path by actuation means, at least one of the faces thereof being smooth which acts as a counter-mold, including pressing means configured to apply pressure and maintain a region of the belt facing and in contact with the first part of the mold, such that the cavity is in a closed and sealed position during a molding condition.

Thanks to these characteristics, a system is obtained which has a reduced complexity, since it allows the construction of the mold to be simplified in the manufacturing of, for example, laminar pieces in the form of sheets, since it is only necessary to machine a single part of the mold.

In a preferred embodiment, the actuation means comprise at least a pair of rollers, separated at a distance from each other and facing one another, between which the endless belt passes, such that the rollers transmit movement to the endless belt by contact, at least one roller being connected to motor means.

To facilitate the movement of the endless belt along the path thereof, guide means are provided, arranged along the path of the endless belt.

According to another aspect of the invention, the molding assembly comprises cooling means provided to maintain (or modify) at least one region of the endless belt with a specific temperature value that is different from the temperature of a region of the endless belt during the molding stage.

Furthermore, the assembly can be provided with sliding means that link the movement of the pressing means or first part of the mold with respect to the first part of the mold or pressing means.

Additionally, the molding assembly can include ejection means for the pieces adhered to the endless belt, said ejection means situated at one point along the endless belt, beyond the area where the injection means are located. This way, it is guaranteed that all of the pieces that are molded and initially supported by the belt are not introduced in the molding area.

Preferably, the endless belt is arranged on a longitudinal plane, perpendicular with respect to the horizontal plane, which facilitates the falling of the obtained pieces once they have come out of the molding area, given that they can fall due to gravity. This aspect avoids the use of complicated devices for the ejection of the molded pieces.

Preferably, the endless belt used can be made of a single piece, thereby facilitating the assembly and/or substitution of the same and reducing the manufacturing costs.

It is also an object of the invention to provide a manufacturing method by means of the injection molding of a piece of plastic material with an essentially laminar form, from a mold which has two complementary parts, in which the plastic material has a melting temperature in a range comprised between 60-160°C, more preferably between 60-100°C, in which in one molding stage a flow of melted plastic material is injected in a cavity defined in one of the two parts of the mold that make up a molding area. Specifically, the method of the invention is characterized by the fact that in the molding stage, the molded piece obtained remains adhered to the part of the mold devoid of a cavity, said part of the mold devoid of a cavity being an endless belt that acts in a step by step manner.

Preferably, before the molding stage, when the area of the endless belt is located in the molding area, it has a greater temperature value than the temperature of the part of the mold that is facing the endless belt. This way, depending on the plastic material used (resins with a melting temperature in a range comprised between 60-160°C, more preferably 60-160°C, approximately), the formation of defective pieces due to a poor crystallization of the injected polymer is avoided.

Likewise, and preferably, after the molding stage, the region of the endless belt provided with the piece obtained undergoes a cooling stage to decrease the temperature with respect to the temperature of the belt in the molding area.

An additional object of the patent is to provide a laminar piece obtained by the previously described manufacturing method.

This method can be especially suitable for manufacturing pieces for strengthening footwear, such as for the heel or tip.

Other characteristics and advantages of the injection molding assembly object of the present invention will be evident from the description of a preferred, but not exclusive, embodiment, which is illustrated by way of nonlimiting example in the accompanying drawings, wherein:

### BRIEF DESCRIPTION OF THE DRAWINGS

Figure 1 shows a schematic plan view of an embodiment of an injection molding assembly according to the present invention.
Figure 2 shows a schematic plan view of the assembly shown in the previous figure in a working position or a condition of molding a piece or molding;
Figure 3 shows a schematic side elevation view of the molding assembly which includes an additional view of the pressing means;

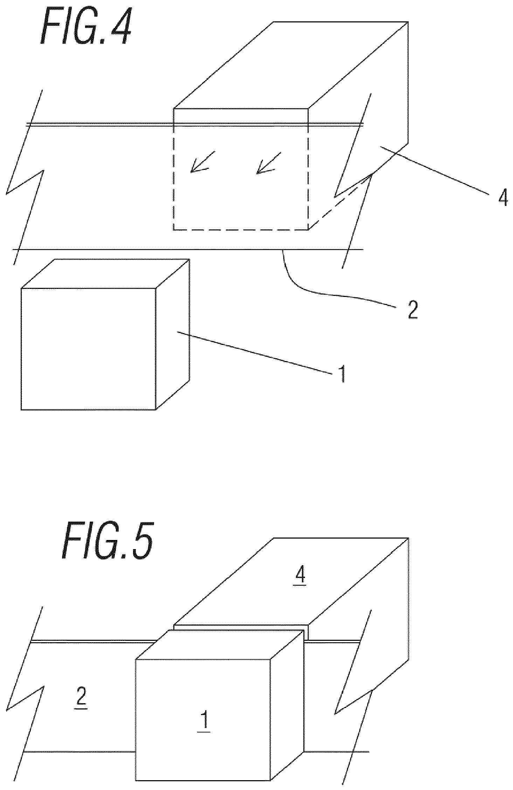

Figure 4 shows an isometric schematic view of the molding area in a stage prior to the molding stage;
Figure 5 shows an isometric schematic view of the molding area in a molding condition; and
Figure 6 shows a schematic view of different stages of the manufacturing process for the pieces according to the present invention wherein the arrow (f) indicates the advance direction of the endless belt.

### DESCRIPTION OF A PREFERRED EMBODIMENT

In view of the aforementioned figures and, in accordance with the numbering adopted, an example of a preferred embodiment of the invention can be observed therein, which comprises the parts and elements indicated and described in detail below.

As shown, the injection molding assembly represented is envisaged to manufacture pieces (P) which externally have at least a flat face, such as laminar pieces in the form of a sheet.

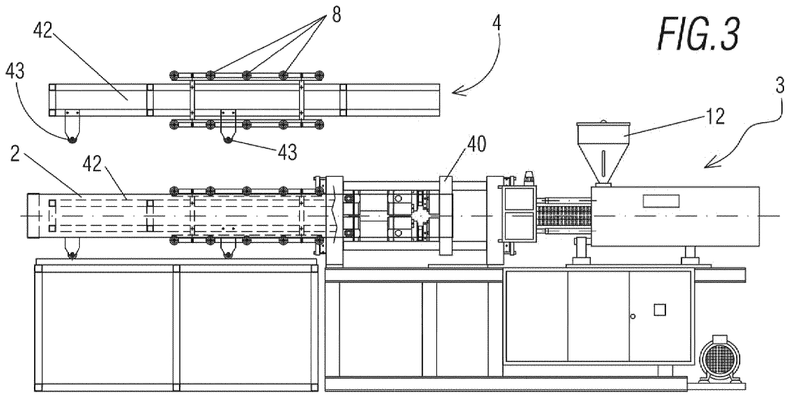

The system comprises injection means provided for injecting a plastic material, a mold for forming a piece, which has two movable parts (1, 2) and are able to face one another, wherein one of the parts (1) of the mold has a mold cavity for forming the molded piece. These injection means comprise an injector machine (3) of a known type (with an injector nozzle, heating means connected to plastic material supply means), and therefore it is not necessary to provide further details of the description thereof. As is shown in figure 3, the injector machine includes feeding means which have a dosing hopper (12) which dispenses the plastic material in the form of pellets.

The second part of the mold (2) consists of an endless belt that moves along a path by actuation means, at least one of the faces thereof being smooth which acts as a counter-mold, including pressing means, generally indicated by the reference (4), which are provided to apply pressure and maintain a region of the belt facing and in contact with the first part of the mold (1), such that at least one cavity is in a closed and sealed position during a molding condition. The endless belt is arranged on a longitudinal plane, perpendicular with respect to the horizontal plane.

The endless belt is made of a metal material, such as steel, for example polished stainless steel, able to withstand the pressure produced inside the cavity where the molding of the piece (P) to be obtained takes place, and thus prevent deformations of the piece on the flat area, in other words, the area of the plastic piece (P) which is in contact with the endless belt.

With respect to the pressing means (4), the same comprise a pressure plate (40) provided with a smooth surface, which moves linearly and perpendicularly to the advance direction of the belt, by means of the help of a conventional sliding system which has a plurality of guide bars (41). Figure 3 shows an additional representation wherein only part of the pressing means (4) are represented, in order to facilitate the understanding thereof. This way it can be seen how the pressure plate (40) is mounted on one end of a carriage (42), axially and horizontally movable also with the help of rolling means, such as rolling elements (43) in the form of rotating wheels that move along a rail or similar.

Both the injection equipment (3) and the previously described pressing means (4) are supported by a single common base.

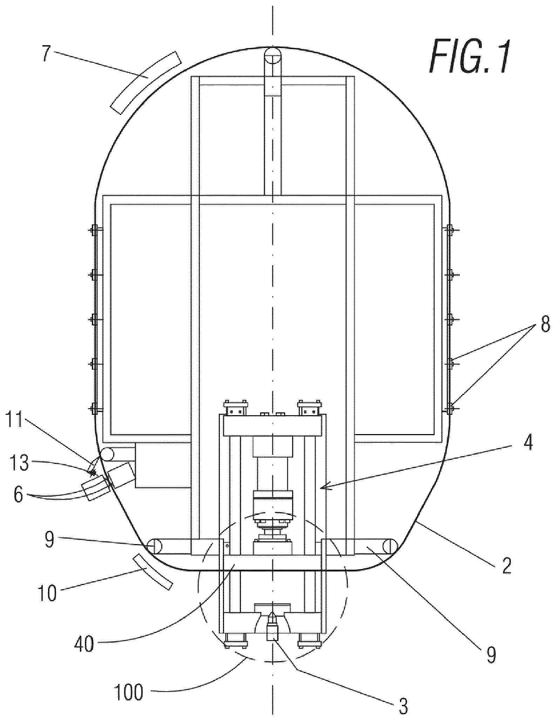

With reference to the actuation means, the same comprise a pair of rollers (6), separated at a distance from each other and facing one another, between which the endless belt passes, such that the rollers transmit movement to the endless belt by contact, at least one of the rollers (6) being connected to motor means (not shown), as represented in figures 1 to 3. It is especially worth mentioning the fact that the movement of the endless belt (2) is synchronized with the movement of the first part of the mold (1) as well as with the pressure plate which acts on the section of the endless belt facing the first part of the mold (1).

To ensure a correct positioning of the endless belt, guide means are provided, arranged along the path of the endless belt, which have a plurality of rollers (8) and positioners (9) situated on the two ends of the molding area (indicated by dashed lines 100) where the endless belt slides.

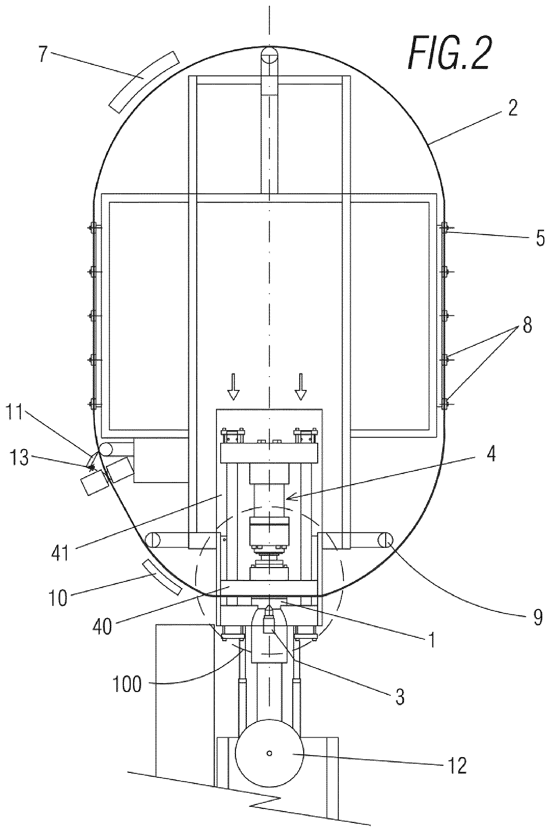

With the aim of reaching and/or maintaining a specific temperature in the area of the endless belt when it is in contact with the first part of the mold, heating means are included, such as heating resistors, an infrared heating system, or any other heating means known in the technical field, which are schematically shown in figures 1 and 2 by reference (10). This way, when the area of the endless belt is located in the molding area (100) it has a greater temperature value than the temperature of the part of the mold (1) that is facing the endless belt. In the same way, in the area away from the molding area, known cooling means may be arranged, schematically indicated by reference (7), (such as an air conditioning machine with adjustable temperature), which are provided to lower the temperature of the endless belt and thereby facilitate the falling of the adhered molded pieces.

Additionally, the molding assembly includes ejection means for the pieces adhered to the endless belt, said ejection means situated at one point along the endless belt, beyond the area where the injection means are located or the molding area. In the embodiment shown, these ejection means comprise a scraper (11) situated on a point of the path of the endless belt, able to be moved in a pivoting way by means of a shaft (13). The presence of this scraper (11) ensures that the belt has no pieces when it is in contact with the first part of the mold (1) in the molding area (100).

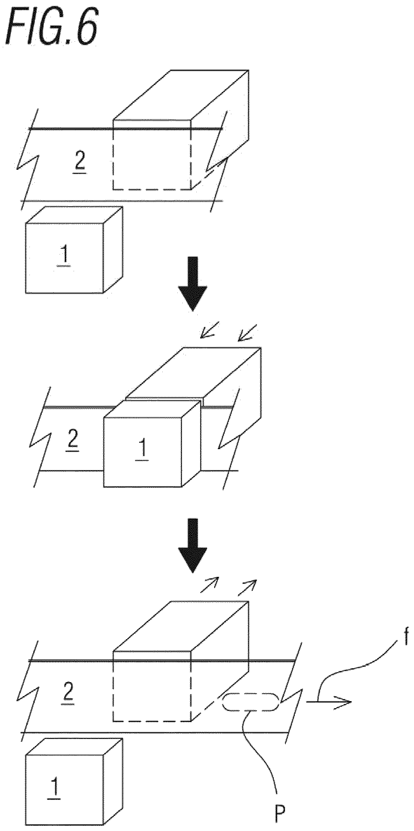

Figure 6 schematically shows the stages of the method of the previously described injection molding assembly, wherein one can see the vertical arrangement of the endless belt with respect to the ground or horizontal plane, as well as the arrangement of, for example, a piece (P) once it comes out of the molding area (100).

The details, shapes, dimensions and other accessory elements used to manufacture the injection molding assembly of the invention may be suitably substituted for others which do not diverge from the scope defined by the claims included below.

## Claims

1. An injection molding assembly for manufacturing pieces which externally have at least one flat face, which comprises injection means (3) provided to inject a plastic material, a mold to form a piece that has two movable parts (1, 2), at least one with respect to the other and able to face each other, wherein one of the two parts of the mold has a mold cavity to form the molded piece, **characterized in that** the second part of the mold (2) comprises an endless belt able to move along a path by actuation means, at least one of the faces thereof being smooth which acts as a counter-mold, including pressing means configured to apply pressure and maintain a region of the belt facing and in contact with the first part of the mold, such that the cavity is in a closed and sealed position during a molding condition.

2. The injection molding assembly according to claim 1, **characterized in that** the endless belt is made of a metal material.

3. The injection molding assembly according to any of the preceding claims, **characterized in that** the actuation means comprise a pair of rollers (6), separated at a distance from each other and facing one another, between which the endless belt passes, such that the rollers (6) transmit movement to the endless belt by contact, at least one roller (6) being connected to motor means.

4. The injection molding assembly according to any of the preceding claims, **characterized in that** it includes guide means arranged along the path of the endless belt.

5. The injection molding assembly according to any of the preceding claims, **characterized in that** it comprises cooling means (7, 10) envisaged to maintain at least one area of the endless belt at a set temperature value.

6. The injection molding assembly according to any of the preceding claims, **characterized in that** sliding means are provided which link the movement of the pressing means (4) or first part of the mold with respect to the first part of the mold (1) or pressing means.

7. The injection molding assembly according to any of the preceding claims, **characterized in that** the pressing means (4) include a pressure plate (40) mounted on a carriage (42) that can move axially by movement means.

8. The injection molding assembly according to claim 7, **characterized in that** the movement means comprise rolling elements (43).

9. The injection molding assembly according to any of the preceding claims, **characterized in that** it includes ejection means for the pieces adhered to the endless belt, said ejection means situated at one point along the endless belt, beyond the area where the injection means and/or the molding area are located.

10. The injection molding assembly according to claim 9, **characterized in that** the movement means comprise a scraper (11) situated at a point along the path of the endless belt.

11. The injection molding assembly according to any of the preceding claims, **characterized in that** the endless belt is arranged on a longitudinal plane perpendicular with respect to the horizontal plane.

12. The injection molding assembly according to any of the preceding claims, **characterized in that** the endless belt is made of a single piece.

13. A manufacturing method by means of the injection molding of a piece of plastic material with an essentially laminar form, from a mold which has two complementary parts, in which the plastic material has a melting temperature in a range comprised between 60-160°C, in which in one molding stage a flow of melted plastic material is injected in a cavity defined in one of the two parts of the mold that make up a molding area, **characterized in that** in the molding stage, the molded piece obtained remains adhered to the part of the mold devoid of the cavity, said part of the mold devoid of the cavity being an endless belt that acts in a step by step manner.

14. The method according to claim 13, **characterized in that** before the molding stage, when the region of the endless belt is in the molding area it has a greater temperature value than the temperature of the part of the mold that is facing the endless belt.

15. The method according to claims 13 and 14, **characterized in that** after the molding stage, the region of the endless belt provided with the obtained piece undergoes a cooling stage to decrease the temperature with respect to the temperature of the belt in the molding area.

16. The method according to claim 13, **characterized in that** the plastic material has a melting temperature in a range comprised between approximately 60-120°C.

17. A laminar piece obtained by means of the manufacturing method according to any of the claims 13 to 16.
